Europäisches Patentamt

European Patent Office

Office européen des brevets

(19)

(11) Numéro de publication: **0 310 526 B1**

(12) **FASCICULE DE BREVET EUROPEEN**

(45) Date de publication du fascicule du brevet:
31.10.90

(51) Int. Cl.⁵: **G01M 3/36**

(21) Numéro de dépôt: 88420322.5

(22) Date de dépôt: 27.09.88

(54) **Procédé et dispositif de contrôle de la pression régnant dans une enceinte ou capacité.**

(30) Priorité: 29.09.87 FR 8713697

(43) Date de publication de la demande:
05.04.89 Bulletin 89/14

(45) Mention de la délivrance du brevet:
31.10.90 Bulletin 90/44

(84) Etats contractants désignés:
CH DE ES FR GB GR IT LI

(56) Documents cités:
GB-A- 1 014 763
GB-A- 1 469 240

(73) Titulaire: **MUTEC INGENIERIE, 526 Ter Chemin du Panorama, F-69300 Caluire(FR)**

(72) Inventeur: **Pailler,André, 1348 Grande-Rue, F-01700 Miribel(FR)**

(74) Mandataire: **Guerre, Dominique et al, CABINET GERMAIN et MAUREAU Le Britannia Tour C 20 Bd E. Deruelle, F-69392 Lyon Cédex 03(FR)**

# Description

La présente invention concerne le contrôle de la pression régnant dans une enceinte ou capacité, et plus généralement de la différence de pression entre l'intérieur et l'extérieur de cette dernière.

Par contrôle d'une pression, on entend tout processus physique permettant de contrôler la présence ou l'absence de ladite pression ou de ladite différence de pression, et/ou de mesurer cette dernière. Ce contrôle résulte en un signal, pouvant être traité ou transformé en un autre signal, par exemple électrique, et servant à différentes fins, telles que commande d'un automatisme, détection de récipients défectueux quant à leur pression interne, etc..

Un domaine privilégié d'application de la présente invention, mais non exclusif, concerne le contrôle en continu, par exemple sur un convoyeur, de récipients rigides, du type bouteilles en verre, fermés par un bouchon, par exemple vissable, contenant un produit alimentaire, par exemple un jus de fruit pasteurisé, sous vide partiel.

De tels récipients comportent en général, ou un bouchon substantiellement plan, se déformant en creux, c'est-à-dire affectant une courbure concave, sous l'action du vide partiel, ou un bouchon ayant une membrane dite "flip", affectant uniquement deux positions, l'une concave vers l'extérieur sous l'action du vide partiel, et l'autre convexe sous l'action de la pression atmosphérique ou ambiante.

Pour contrôler l'existence ou la valeur du vide partiel existant dans de tels récipients traités en continu et en milieu industriel sur un convoyeur, on a déjà proposé d'intégrer les bouchons tels que précédemment définis, dans une chaine de traitement optique, permettant d'obtenir un signal optique représentatif du vide partiel, sans contact ou mesure sur les récipients eux-mêmes.

Ainsi, selon le brevet GB-A 1 469 240, et pour des récipients sous vide partiel tels que précédemment définis, le bouchon de chaque récipient à paroi rigide forme ou incorpore un élément de contrôle, substantiellement plan, séparant l'intérieur de l'extérieur du récipient, et susceptible de se courber sous l'effet de la différence de pression entre l'intérieur et l'extérieur dudit récipient. Il s'agit en l'occurrence d'une surface sensiblement plate, affectant une courbure concave vers l'extérieur sous l'action du vide partiel. Et le traitement optique comporte les étapes suivantes :

a) à partir d'une source lumineuse, on dirige un faisceau lumineux incident sur l'élément de contrôle ou bouchon, lequel émet un faisceau lumineux réfléchi ;

b) le faisceau réfléchi par le bouchon constitue le faisceau de contrôle, étant entendu que ce dernier pourrait être obtenu à partir du faisceau réfracté, en cas de bouchon transparent ;

c) on choisit comme paramètre de contrôle, l'intensité lumineuse du faisceau de contrôle, en un point focal de référence, déterminé par une valeur préétablie du vide partiel ; cette intensité est maximum en ce point, compte-tenu de la concavité affectée par le bouchon pour la valeur préétablie du vide partiel, et cette intensité est minimum pour un bouchon totalement plat, compte-tenu du parallélisme ou de la dispersion correspondante du faisceau réfléchi de contrôle ;

d) par un élément photo-sensible, par exemple une cellule photo-électrique, on capte l'intensité lumineuse au point focal de référence, dont la valeur représente la pression régnant dans le récipient.

Cette intensité lumineuse est ensuite utilisée comme signal de contrôle, dans un traitement électronique approprié, pour détecter les récipients défectueux, et les éliminer du convoyeur.

Selon le brevet GB-A 1 014 763, on a proposé une méthode de contrôle du meme type, les récipients étant équipés dans ce cas, d'un bouchon avec "flip", c,est-à-dire avec une membrane bi-stable en fonction de la pression. Par différence avec la méthode selon le brevet GB-A 1 469 240, dans ce cas le faisceau de contrôle est obtenu à partir du faisceau réfléchi, par occultation partielle et traitement optique de ce dernier ; et l'intensité lumineuse dudit faisceau, est soit nulle, pour la position concave (vide partiel) du flip, compte-tenu de l'occultation du faisceau convergent réfléchi, soit maximum, pour la position convexe (absence du vide partiel) du flip, compte-tenu de la divergence du faisceau réfléchi, et de son traitement optique convergent vers un point focal, où l'intensité lumineuse réfléchie est mesurée. Toujours dans ce cas, le signal de contrôle (intensité lumineuse) maximum est retenu pour la détection des récipients défectueux ; il s'agit donc d'un contrôle négatif, à la différence du contrôle positif selon le brevet GB-A 1 469 240.

Aucune de ces méthodes ne permet d'obtenir un contrôle effectif en milieu industriel, et en particulier à partir d'un traitement en continu des récipients controlés, sur un convoyeur, pour les raisons suivantes.

Premièrement, le pouvoir de réflection d'un bouchon n'est pas un paramètre contrôlé lors de sa fabrication. Par ailleurs, diverses inscriptions colorées ou non figurant sur le bouchon, aléatoires quant à leur position effective par rapport à l'axe du récipient, dans le champ du faisceau incident ou du faisceau réfléchi, viennent perturber la régularité du faisceau de contrôle, c'est-à-dire la distribution homogène de son intensité lumineuse, s'il s'agit du paramètre de contrôle retenu, et ce de manière totalement aléatoire. Enfin, le niveau de vide partiel dans chaque récipient n'est pas constant en production industrielle. Pour ce premier ordre de raisons, et même en supposant que le récipient soit totalement immobile au moment du contrôle ou de la mesure, le capteur reçoit un signal optique identique à une image variable du bouchon, inexploitable par le capteur, compte-tenu de sa forme irrégulière et aléatoire.

Deuxièmement, différentes perturbations viennent contrarier de manière relativement importante la position ou l'homogénéité dans l'espace du signal optique de contrôle, par exemple la localisation de ce signal au point focal de référence, assigné pour capter l'intensité lumineuse dudit signal :

- du fait de leur transport sur un convoyeur, les récipients ne sont jamais alignés les uns derrière les autres de manière régulière, par rapport à la direction nominale de transport ; seule une partie du bouchon peut jouer le rôle de l'élément plan de contrôle, faisant partie de la chaîne de traitement optique ;
- les récipients, en particulier en verre, peuvent avoir différentes hauteurs, compte tenu des tolérances de fabrication relativement larges dans l'industrie du flaconnage ; de ce fait, le point focal peut se trouver déplacé, en avant ou en arrière du point focal de référence ;
- pour la pression partielle de référence, la courbure du bouchon est aléatoire, compte tenu de sa résistance mécanique ;
- enfin, les vibrations propres au fonctionnement du convoyeur déplacent le point focal effectif de part et d'autre du point focal de référence.

Tout ceci a pour résultat pratique que le capteur ou récepteur reçoit un signal optique, dont la forme est soit trop grossière, soit trop fine par rapport au type de capteur utilisé.

Compte-tenu de cette dispersion du signal lumineux de contrôle, par rapport au point focal de référence, le brevet GB-A 1 014 763 a proposé de disposer une série de cellules photo-électriques, alignées dans un plan perpendiculaire à l'axe du faisceau de contrôle, et passant par le plan focal de référence, chaque cellule étant reliée en parallèle à un récepteur ; de fait, on dispose actuellement de barrettes rassemblant de manière alignée des éléments photo-électriques élémentaires du type CCD ("charge coupled device"), et permettant une résolution relativement fine, compte-tenu de la largeur relativement faible de chaque élément, par exemple de l'ordre de dix à treize microns. La disposition d'une telle barrette, directement dans le plan focal de référence, ne permet pas non plus d'obvier les perturbations constatées du signal de contrôle. En effet, la non linéarité du signal est incompatible avec une analyse de l'intensité du signal de contrôle.

Quant aux composants CCD du type matriciel, c'est-à-dire dont les éléments photo-électriques sont répartis selon deux dimensions, leur temps de pose ou d'exposition relativement faible, en général de l'ordre de 1/50 seconde, ne permet pas d'observer au passage un signal de contrôle durant d'une durée de une à cinq milliseconde, ce qui limite la cadence du contrôle des récipients à quelques milliers de récipients par heure ; or les chaines de production actuelles doivent permettre un contrôle au-delà de cette cadence, par exemple jusqu'à 50 000 flacons par heure.

La présente invention se propose de remédier aux inconvénients précités. Plus précisément, l'invention a notamment pour objet une méthode de contrôle de la pression dans une enceinte, capacité, ou récipient, du type optique, mais permettant de s'affranchir des sources principales de perturbation du signal optique de contrôle. L'invention a en particulier pour objet une méthode permettant d'obtenir un signal optique de contrôle, significatif quant à sa valeur, régulier d'un récipient à un autre, et distribué de manière homogène dans l'espace, par exemple dans le plan focal de référence perpendiculaire au faisceau de contrôle.

La présente invention a également pour objet une méthode de contrôle en continu de récipients du type précité, autorisant des cadences élevées tout en assurant le contrôle effectif de chaque récipient individuel.

Selon la présente invention, on a découvert que ces objectifs pouvaient être atteints par la coopération des deux moyens suivants :
- d'une part, on dispose un support diffusant transversalement, par exemple perpendiculairement, dans le faisceau de contrôle, ce support diffusant passant notamment par le point focal de référence déterminé comme précédemment par la valeur préétablie de la différence de pression entre l'intérieur et l'extérieur de l'enceinte ; de cette manière, la grandeur physique du faisceau de contrôle, captée comme paramètre de controle, consiste en une tache lumineuse s'étalant plus ou moins dans le support diffusant, notamment autour du point focal de référence ;
- et d'autre part, de l'autre côté du support diffusant, par rapport à l'élément de contrôle, par exemple le bouchon du récipient contrôlé, on reçoit l'image formée par la tache lumineuse, par exemple dans une caméra vidéo, selon au moins une dimension de ladite tache, pour obtenir un signal vidéo représentant la pression régnant dans ladite enceinte.

Ce signal vidéo peut être ensuite traité pour obtenir un signal électrique de contrôle, représentatif de la tache lumineuse sur le support diffusant, et donc de la différence de pression entre l'intérieur et l'extérieur de l'enceinte, par exemple du vide partiel dans un récipient.

Par "support diffusant", on entend une surface plane rigide, absorbant et répartissant à la fois la lumière interceptée dans le faisceau de contrôle, et correspondant à l'image concentrée, voire ponctuelle, de l'élément de contrôle substantiellement plan, par exemple le bouchon d'un récipient ; il peut s'agir par exemple, comme décrit ci-après, de l'association d'un verre sablé et d'un verre dépoli.

Selon l'invention, on a découvert que les deux moyens précités coopéraient de la manière suivante:
- ramené à l'échelle de la tache lumineuse obtenue dans le support diffusant, consistant de manière générale en une image concentrée de l'élément plan de contrôle, notamment du bouchon, par exemple de l'ordre de 2 à 4 mm de diamètre, ledit support diffusant permet d'homogénéiser toutes les différences ponctuelles ou locales du signal de contrôle ainsi capté, résultant des différentes perturbations énumérées précédemment ; le support "nivelle" ou moyenne en quelque sorte toutes ces différences, tout en les intégrant (au sens mathématique de ce terme), pour obtenir une tache lumineuse, répartie quant à son intensité de manière "gaussienne" dans un plan passant par l'axe optique du faisceau de contrôle ;
- de l'autre côté du support diffusant, et selon la dimension d'observation de la caméra vidéo, la tache lumineuse présente une intensité globale suffisante pour impressionner le récepteur vidéo, ou chacun de ses éléments photo-sensibles, sur une plage relativement longue, par exemple de l'ordre de quarante millimètres, et ce avec un temps d'exposition relativement court, par exemple de l'ordre de 1,2 milliseconde ; et le signal vidéo ainsi obtenu représente la totalité, et non une partie discrétionnaire aléatoire de la tache lumineuse, et donc du signal optique de contrôle.

En pratique, il n'est pas essentiel que le support diffusant soit disposé au point focal de référence, c'est-à-dire passe par ce dernier, puisque ce support permet une homogénéisation du signal optique, indépendamment de sa position. Mais bien entendu, en pratique, il est commode de disposer ce support, à un point focal de référence, ou au voisinage de ce dernier.

Au total, le signal vidéo est effectivement représentatif du signal optique de contrôle, et donc de la pression dans le récipient ; il peut donc être utilisé en milieu industriel, pour un contrôle en continu, y compris à des cadences élevées, en particulier sans synchronisation entre le passage du flacon et la mesure ou le contrôle de la pression.

Par ailleurs, pour ajuster la sensibilité du contrôle ou de la mesure, on peut ajuster l'intensité de l'éclairement incident, au lieu d'ajuster le seuil ou le gain de la caméra vidéo, ce qui permet de toujours utiliser cette dernière dans sa plage de fonctionnement optimale.

La présente invention est maintenant décrite par référence aux dessins annexés, dans lesquels :

- la figure 1 représente de manière schématique, un dispositif de contrôle conforme à la présente invention, associé à un convoyeur transportant des récipients dont la pression interne (vide partiel) est contrôlée en continu ; cette figure explicite également la méthode de contrôle selon la présente invention ;
- la figure 2 représente la tache lumineuse captée sur le support diffusant faisant partie d'un dispositif selon l'invention, et représentative de la pression interne des récipients contrôlés ;
- la figure 3 représente de manière schématique le mode de traitement de la tache lumineuse captée sur le support diffusant, et représentative de la pression interne des récipients, pour obtenir finalement un signal de sortie exploitable à des fins de contrôle.

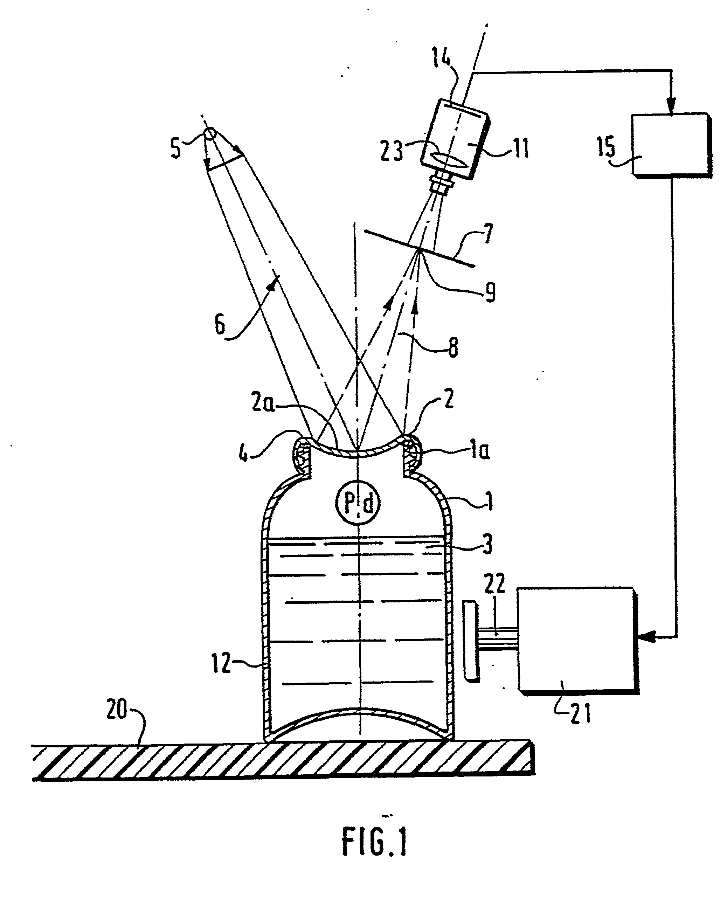

Conformément à la figure 1, les récipients traités (12) et contrôlés consistent chacun en une bouteille (1) en verre, remplie avec un liquide (3) tel qu'un jus de fruit. Chaque récipient est fermé par un couvercle métallique mince (2), vissé de manière étanche, grace à un joint (4), sur l'extérieur du col (1a). Chaque récipient contrôlé doit être sous vide partiel, ayant une valeur de référence (Pd), de telle sorte que la partie (2a) du couvercle (2), située dans l'ouverture du col (1a), est déformée en creux, selon une courbure régulière et concave.

Aux fins de la description suivante, il y a complète équivalence entre les termes suivants :
- "enceinte", "capacité", et "récipient" ;
- "couvercle", "bouchon", et "élément de contrôle", dès lors que chacun de ces éléments est substantiellement plan, sépare l'intérieur et l'extérieur d'une enceinte, et est susceptible de se courber comme précédemment, sous l'effet de la différence de pression entre l'intérieur et l'extérieur de ladite enceinte.

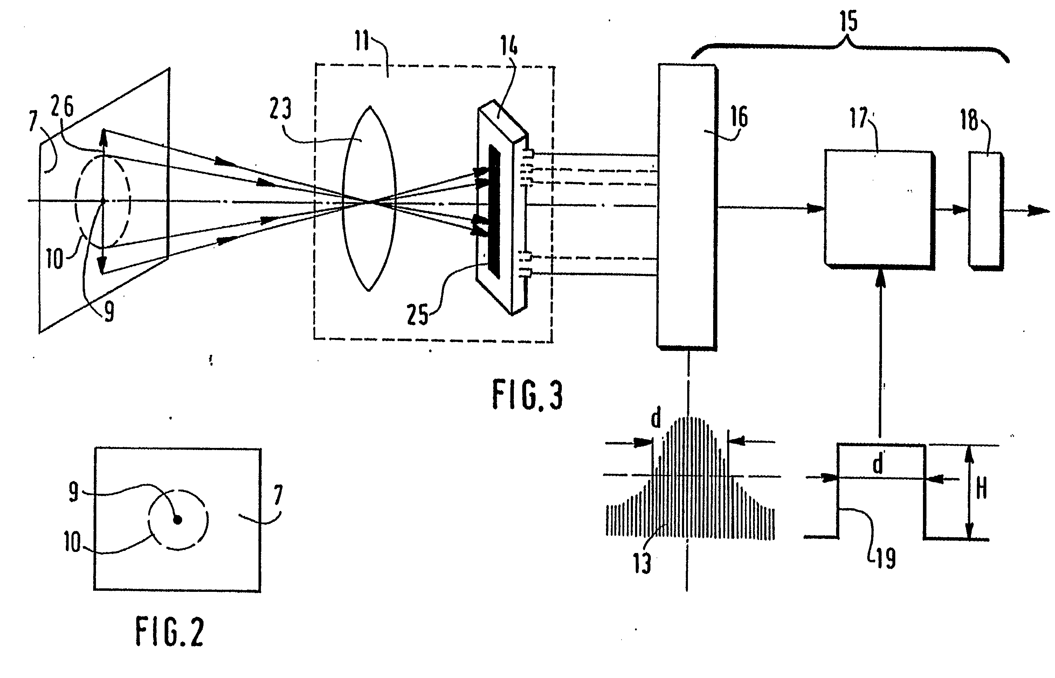

Afin de contrôler en continu la pression interne des récipients (12), ceux-ci sont transportés, et donc déplacés en translation, par un convoyeur (20), représenté de manière schématique à la figure 1. Ce dernier se déplace perpendiculairement au plan de la figure 1. En conséquence, chaque récipient (1) est amené à passer successivement en vis-à-vis du dispositif de contrôle selon l'invention, décrit ci-après, et en particulier du faisceau lumineux incident (6), référencé dans la description suivante. Au passage de chaque récipient (1), le dispositif selon l'invention délivre un signal vidéo, référencé (13) à la figure 3, et utilisé ou transformé en signal de contrôle (19) (toujours selon la figure 3). Ce signal de contrôle, discriminé de manière appropriée, par exemple en comparaison avec un seuil prédéterminé, permet d'éliminer les récipients défectueux, au moyen d'un système (21) avec poussoir (22), disposé sur le côté du convoyeur (20), et permettant de déplacer chaque récipient défectueux vers une sortie appropriée.

Le dispositif de contrôle proprement dit, conforme à la présente invention, comprend tout d'abord un système optique, constitué par les composants ou éléments suivants :

a) une source lumineuse (5), collimatée, consistant en une lampe émettant une lumière intense, par exemple une lampe halogène avec réflecteur incorporé ; cette source dirige un faisceau lumineux (6) très concentré, sur l'élément ou zone de contrôle (2a) précédemment défini, avec une incidence très proche de l'axe de symétrie du récipient (1), et par conséquent du bouchon (2a) ; on obtient ainsi un faisceau lumineux de contrôle, s'identifiant au faisceau lumineux réfléchi (8), étant entendu qu'un faisceau de contrôle pourrait être obtenu par des moyens optiques appropriés, à partir du faisceau réfléchi, et/ou du faisceau réfracté en cas de bouchon transparent ;

b) un capteur (7), consistant en un support diffusant, disposé transversalement dans le faisceau de contrôle (8), et plus précisément perpendiculairement par rapport à l'axe optique du faisceau réfléchi (8) ; ce support diffusant passe par un point focal (9) de référence, ou au voisinage de ce dernier, déterminé par la réflection et focalisation du faisceau réfléchi (8), sous l'effet de la concavité de l'élément de contrôle (2a), pour la valeur préétablie (Pd) du vide partiel dans chaque récipient (1) ; conformément à la figure 2, sous l'effet des différentes perturbations ou variations, rencontrées dans la pratique et en milieu industriel pour le contrôle en continu de ces récipients, on obtient sur le support diffusant (7), une tache lumineuse (10), relativement concentrée, par exemple ayant un diamètre de l'ordre de quatre millimétres, s,étalant plus ou moins autour du point focal (9) de référence ; selon l'invention, c'est cette tache lumineuse (10) qui est choisie comme signal optique de contrôle, et comme décrit et défini ci-après, c'est l'intensité lumineuse globale de cette tache qui est retenue comme paramètre ou grandeur physique de contrôle ;

c) un récepteur (11) de la tache lumineuse (10), consistant en une caméra vidéo (11), disposée selon l'axe optique du faisceau réfléchi (8), de l'autre coté du support diffusant (7), par rapport à l'élément de contrôle (2a) ; cette caméra observe la tache lumineuse (10), et développe donc une image de cette dernière, pour délivrer un signal vidéo (13) (cf. figure 3), représentatif comme décrit ci-après de la pression régnant dans chaque récipient (1) ; plus précisément, la caméra vidéo (11) est un analyseur vidéo de l'image obtenue de la tache lumineuse (10) selon une dimension ou ligne, comprise dans le plan des figures 1 et 3, et perpendiculaire à l'axe optique du faisceau réfléchi (8) ; cette caméra vidéo comporte schématiquement une optique (23), et une barrette (14) d'éléments discrétionnaires photosensibles, alignés selon la dimension ou direction précitée, correspondant donc à la direction d'observation ;

d) un moyen (15), représenté de manière schématique aux figures 1 et 3, permettant d'obtenir le signal vidéo (13), à partir de l'image linéaire de la tache lumineuse (10), reçue par la caméra (11), de transformer ce signal vidéo en un signal électrique de contrôle (19), et d'utiliser ce signal, en tension ou en intensité, pour actionner le dispositif d'éjection (21), par détection simple, ou comparaison avec un seuil préétabli.

Le support diffusant (7) peut être obtenu en superposant un verre dont une face est dépolie, et un autre verre dont une face est sablée, la superposition étant faite côté dépoli contre côté sablé. Le verre dépoli absorbe et donne une image concentrée de la partie flexible (2a) du bouchon (2) (y compris des détails, tels que les impressions), et le verre sablé diffuse la lumière de l'image concentrée, pour la rendre homogène quant son intensité lumineuse, avec une répartition très régulière.

Conformément à la figure 3, la caméra (11), ou analyseur vidéo d'image, comprend une optique, avec lentille (23), et une barrette (14) d'éléments photoélectriques (25), de forme élémentaire carrée, de très petites dimensions (de l'ordre de dix à treize microns de côté) ; cette barrette (25) détermine un champ de vision (26) linéaire, de plus grande dimension que le diamètre de la tache lumineuse (10) concentrée, et représentée de manière agrandie à la figure 3. La barrette peut comporter sur une longueur de cinq millimètres cinq cent douze éléments photo-électriques précités, déterminant une image linéaire de 512 pixels.

Les moyens (15) représentés de manière schématique à la figure 1, et détaillés à la figure 3, peuvent être ou intégrés dans la caméra (11), ou reportés à l'extérieur de cette dernière, sans qu'il s'agisse là d'une différence significative. Ces moyens comprennent :

- un système (16) de balayage, par exemple à une cadence de 800 Hz, relié séparément à chaque élément photo-sensible de la barrette (14), et délivrant un signal vidéo (13), constitué par le développement des différentes intensités électriques générées par les différents éléments photo-sensibles de la barrette, proportionnellement à l'intensité lumineuse globale et répartie du signal optique constitué par la tache (10). Comme discuté précédemment, et pour les mêmes raisons, en pratique, ce signal vidéo a une forme "gaussienne" ;

- un moyen (17) de cadrage du signal vidéo (13), permettant de couper ce dernier à sa mi-hauteur, de l'amplifier, et de le mettre en forme, pour obtenir un signal électrique (19) ayant une forme carrée, de hauteur H et de largeur $\underline{d}$, laquelle correspond à la coupure choisie du signal vidéo ; ce signal électrique peut être utilisé en tension ou en intensité. Finalement, le signal électrique (19) est détecté par le moyen (18), ou comparé dans ce dernier pour obtenir un signal de contrôle, de type analogique ou numérique, envoyé vers le système d'éjection (21).

La source lumineuse (5) doit être aussi intense que possible, de manière à obtenir un faisceau de contrôle (8) relativement insensible aux couleurs du bouchon plat (2), et aussi pour pouvoir effectuer des observations ou mesures très rapides. Si nécessaire, le signal optique de contrôle peut être traité optiquement, avant d'aboutir au support (7) ou à la caméra (11), pour éliminer par exemple certaines longueurs d'ondes parasites.

Grâce au dispositif selon l'invention, la tache lumineuse concentrée (10) obtenue sur le support diffusant (7), est représentative de la dépression existant au sein de chaque récipient (12) :

- si la dépression n'existe pas, l'intérieur de la bouteille se trouve en équilibre de pression avec l'atmosphère extérieure, et la partie (2a) du bouchon (2) est alors plane et horizontale ; aucune tache lumineuse n'est alors obtenue sur le support (7), ou cette tache lumineuse est beaucoup trop diffuse par rapport aux dimensions de ce dernier ; et dans les deux cas, rien ne peut être observé par la caméra (11) ;

- si la dépression au sein de la bouteille (1) est égale à la valeur de référence (Pd), alors la courbure de la partie (2a) épouse une concavité prédéterminée, correspondant à une focalisation du faisceau réfléchi (8) sur le support (7), et déterminant la tache lumineuse concentrée (10), compte-tenu des perturbations rencontrées dans la pratique ; alors la caméra (11) peut observer et analyser cette tache de lumière, et on obtient ainsi à la sortie du système (15) un signal de contrôle ;

- si la dépression dans le récipient (1) varie autour de la valeur de référence (Pd), alors la tache lumineuse circulaire (10) a un rayon qui varie, et représente la variation de pression au sein du récipient (1).

Comme indiqué précédemment, en contrôle continu, le signal détecté comparé dans le moyen (18) est utilisé pour discriminer un récipient (1) présentant la valeur préétablie de la pression interne, correspondant à l'obtention d'une tache lumineuse concentrée sur le support (7), d'un récipient ne présentant pas cette valeur préétablie, pour lequel aucune tache ne peut être analysée par la figure (11). Plus précisément, selon l'invention, on procède à un contrôle positif, ce qui veut dire que la valeur maximum H du signal électrique de sortie (19) est détectée pour contrôler les récipients corrects en pression, l'absence de ce signal de contrôle entraînant l'éjection du récipient défectueux.

Les mêmes principes que ceux définis précédemment peuvent être utilisés pour contrôler un récipient dont la pression interne nominale doit excéder la pression atmosphérique, et déterminer par exemple une forme convexe du bouchon (2) Dans ce cas, il suffit de disposer dans le chemin optique du faisceau réfléchi (8), une lentille ou tout autre moyen équivalent, pour obtenir un faisceau de contrôle ayant à nouveau les caractéristiques décrites ci-dessus, et permettant le même contrôle ou la même mesure au sein du récipient (1).

## Revendications

1/ Procédé de contrôle de la pression régnant dans une enceinte (1) délimitée par une paroi rigide (12), selon lequel :
- d'une part, on prévoit dans ladite paroi un élément de contrôle (2a), substantiellement plan, séparant l'intérieur et l'extérieur de l'enceinte, et susceptible de se courber sous l'effet de la différence de pression entre l'intérieur et l'extérieur de ladite enceinte ;
- d'autre part, l'élément de contrôle (2a) fait partie d'une chaine de traitement optique, lequel comporte les étapes suivantes :
a) à partir d'une source (5), on dirige un faisceau lumineux incident (6) sur l'élément de contrôle, lequel émet un faisceau lumineux réfléchi (8), et/ou un faisceau lumineux réfracté ;
b) on obtient un faisceau lumineux de contrôle (8) à partir du faisceau réfléchi, et/ou du faisceau réfracté ;
c) on choisit comme paramètre de contrôle une grandeur physique du faisceau de contrôle, variant en fonction de la courbure de l'élément de contrôle (2a) ;
d) on capte (7) le paramètre de contrôle, dont la valeur représente la pression régnant dans ladite enceinte,
**caractérisé** en ce que, d'une part, on dispose un support (7) diffusant transversalement dans le faisceau de contrôle (8), passant notamment par un point focal de référence (9) déterminé par une valeur préétablie (Pd) de la différence de pression entre l'intérieur et l'extérieur de l'enceinte, moyennant quoi la grandeur physique captée comme paramètre de contrôle consiste en une tache lumineuse (10) s'étalant plus ou moins dans le support diffusant, notamment autour du point focal (9) de référence, et d'autre part, de l'autre côté du support diffusant par rapport à l'élément de contrôle (2a), on reçoit l'image formée par la tache lumineuse, selon au moins une dimension de cette dernière, pour obtenir un signal vidéo (13) représentant la pression régnant dans ladite enceinte.

2/ Procédé selon la revendication 1, caractérisé en ce que le signal vidéo (13) est transformé en un signal électrique de contrôle (19).

3/ Procédé selon la revendication 2, caractérisé en ce que le signal de contrôle (19) est utilisé pour discriminer (18) une enceinte (1) présentant la valeur préétablie (Pd) de la différence de pression entre l'intérieur et l'extérieur, correspondant au point focal (9) de référence, d'une enceinte (1) ne présentant pas cette valeur préétablie.

4/ Procédé selon la revendication 3, caractérisé en ce que le signal de contrôle (19) retenu pour la discrimination correspond à la valeur électrique maximum (H) de sortie, obtenue pour la valeur préétablie (Pd) de la différence de pression.

5/ Procédé selon l'une quelconque des revendications 1 à 4, mis en oeuvre pour le contrôle en continu de récipients (1) dont le contenu (3) doit être maintenu sous vide partiel, lesdits récipients comprenant une ouverture (1a) fermée de manière étanche par un couvercle (2) susceptible de se courber (2a) vers l'intérieur en fonction du vide partiel, caractérisé en ce que :
- on déplace (20) en translation lesdits récipients ;
- on fait passer successivement chaque récipient (1) sous le faisceau lumineux incident (6), chaque dit récipient jouant le rôle de ladite enceinte dont on veut contrôler la pression intérieure, et chaque couvercle (2) associé jouant le rôle de l'élément de contrôle (2a) ;
- on utilise le signal vidéo (13) associé à chaque récipient comme signal de contrôle, lequel permet d'éliminer les récipients défectueux.

6/ Dispositif de contrôle de la pression régnant dans une enceinte (1) délimitée par une paroi rigide (12), laquelle comporte un élément (2a) de contrôle, substantiellement plan, séparant l'intérieur et l'extérieur de l'enceinte, et susceptible de se courber sous l'effet de la différence de pression entre l'intérieur et l'extérieur de ladite enceinte; ledit dispositif comprenant un système optique dont fait partie l'élément de contrôle à courbure variable, et comportant :

a) une source lumineuse (5) pour diriger un faisceau lumineux incident (6) sur l'élément de contrôle ;
b) un système optique pour obtenir un faisceau lumineux de contrôle, à partir du faisceau lumineux réfléchi (8) et/ou du faisceau réfracté par l'élément de contrôle ;
c) un capteur (7) d'une grandeur physique du faisceau de contrôle, ou paramètre de contrôle, variant en fonction de la courbure de l'élément de contrôle, délivrant un signal représentant la pression régnant dans ladite enceinte;
d) un récepteur (11) du paramètre de contrôle capté, délivrant un signal représentant la pression régnant dans ladite enceinte,
caractérisé en ce que d'une part, le système optique comporte un support diffusant (7) disposé transversalement dans le faisceau de contrôle (8), et passant notamment par un point focal (9) de référence déterminé par une valeur préétablie (Pd) de la différence de pression entre l'intérieur et l'extérieur de l'enceinte, moyennant quoi la grandeur physique captée comme paramètre de contrôle consiste en une tache lumineuse (10), s'étalant plus ou moins dans le support diffusant (7), notamment autour du point focal (9) de référence, et d'autre part, le récepteur consiste en une caméra vidéo (11), disposée de l'autre coté du support diffusant (7) par rapport à l'élément de contrôle (29), observant ladite tache lumineuse, et délivrant un signal vidéo (13) représentant la pression régnant dans ladite enceinte.

7/ Dispositif selon la revendication 6, caractérisé en ce que la caméra vidéo (11) est un analyseur de l'image de la tache lumineuse (10), selon au moins une dimension d'observation de cette dernière.

8/ Dispositif selon la revendication 7, caractérisé en ce que la caméra vidéo comprend un barrette (14) d'éléments photo-sensibles, alignés selon la direction d'observation.

9/ Dispositif selon la revendication 7, selon lequel la caméra vidéo comprend un moyen (17) de transformation du signal vidéo (13) en un signal électrique de contrôle (19).

**Patentansprüche**

1. Verfahren zum Kontrollieren des, in einem von einer starren Wand (12) umgrenzten Behälter (1) herrschenden Druckes, bei dem:
   – einerseits in der genannten Wand ein im wesentlichen ebenes Kontrollelement (2a) vorgesehen ist, das den Innenraum von der Außenseite des Gehäuses trennt, und das in der Lage ist, sich unter der Wirkung des Druckunterschiedes zwischen dem Innenraum und der Außenseite des Gehäuses zu krümmen;
   – andererseits das Kontrollelement (2a) Teil einer optischen Verarbeitungskette ist, die folgende Etappen aufweist:
   a) von einer Quelle (5), wird ein einfallendes Strahlenbündel (6) auf das Kontrollelement gerichtet, das ein reflektiertes Strahlenbündel (8) und/oder ein gebrochenes Strahlenbündel aussendet;
   b) aus dem reflektierten und/oder dem gebrochenen Bündel wird ein Kontrollstrahlenbündel (8) erhalten;
   c) man wählt als Kontrollparameter eine physikalische Größe des Kontrollbündels aus, die sich abhängig von der Krümmung des Kontrollelementes (2a) verändert;
   d) man erfaßt (7) den Kontrollparameter, dessen Wert den im Behälter vorherrschenden Druck repräsentiert, dadurch gekennzeichnet, daß einerseits ein zerstreuender Träger (7) querverlaufend in das Kontrollbündel (8) angeordnet wird, der insbesondere durch einen Referenzfokussierpunkt (9) verläuft, der durch einen vorbestimmten Wert (Pd) des Druckunterschieds zwischen dem Innenraum und der Außenseite des Behälters bestimmt ist, wobei die physikalische Größe, die als Kontrollparameter erfaßt wird, aus einem Lichtfleck (10) besteht, der sich mehr oder weniger im zerstreuenden Träger erstreckt, insbesondere um den Referenzfokussierpunkt (9), und daß andererseits, auf der, im Hinblick auf das Kontrollelement (2a) gesehen anderen Seite des zerstreuenden Trägers, das durch den Lichtfleck gebildete Bild aufgenommen wird, und zwar in zumindest einer Raumrichtung des Lichtfleckes, damit ein Videosignal (13) erhalten wird, das den in dem Behälter herrschenden Druck repräsentiert.

2. Verfahren nach Anspruch 1, dadurch gekennzeichnet, daß das Videosignal (13) in ein elektrisches Kontrollsignal (19) transformiert wird.

3. Verfahren nach Anspruch 2, dadurch gekennzeichnet, daß das Kontrollsignal (19) dazu verwendet wird, um einen Behälter (1), der den vorbestimmten Wert (Pd) des Druckunterschieds zwischen der Innen- und der Außenseite aufweist, der dem Referenzfokussierpunkt (19) entspricht, von einem Behälter (1) zu unterscheiden (18), der diesen vorbestimmten Wert nicht aufweist.

4. Verfahren nach Anspruch 3, dadurch gekennzeichnet, daß das Kontrollsignal (19), das zur Unterscheidung festgehalten wird, dem maximalen elektrischen Ausgangswert (H) entspricht, der für den vorbestimmten Druckunterschiedswert (Pd) erhalten wird.

5. Verfahren nach einem der Ansprüche 1 bis 4 zum Durchführen der fortlaufenden Kontrolle von Behältern (1), deren Inhalt (3) bei einem Unterdruck gehalten werden soll, wobei die Behälter eine Öffnung (1a) aufweisen, die durch einen Deckel (2) dicht verschlossen ist, der sich in Abhängigkeit von dem Unterdruck in Richtung Innenraum krümmen (2a) kann, dadurch gekennzeichnet,
   – daß die Behälter verschoben (20) werden;
   – daß man jeden Behälter (1) durch das einfallende Strahlenbündel (6) treten läßt, wobei jeder Behälter die Rolle des Behälters spielt, von dem man den Innendruck kontrollieren möchte und wobei jeder damit verbundene Deckel (2) die Rolle des Kontrollelementes (2a) spielt;
   – daß man das damit verbundene Videosignal (13) jedes Behälters als Kontrollsignal verwendet, welches ermöglicht, die defekten Behälter auszusortieren.

6. Vorrichtung zum Kontrollieren des, in einem von einer starren Wand (12) umgrenzten Behälter (1) herrschenden Druckes, mit einem im wesentlichen ebenen Kontrollelement (2a), das den Innenraum von der Außenseite des Behälters trennt, und das in der Lage ist, sich unter der Wirkung des Druckunterschiedes zwischen dem Innenraum und der Außenseite des Behälters zu krümmen; wobei die Vorrichtung ein optisches System enthält, von dem das Kontrollelement mit veränderbarer Krümmung ein Bestandteil ist, und das ferner enthält:
   a) eine Lichtquelle (5), um ein einfallendes Strahlenbündel (6) auf das Kontrollelement zu richten;
   b) ein optisches System, um aus dem vom Kontrollelement kommenden reflektierten Strahlenbündel (8) und/oder gebrochenen Strahlenbündel ein Kontrollstrahlenbündel zu erhalten;
   c) einen Aufnehmer (7) für eine physikalische Größe des Kontrollbündels oder einen Kontrollparameter, der sich in Abhängigkeit von der Krümmung des Kontrollelements verändert, wobei dieser ein Signal liefert, das den im Behälter vorherrschenden Druck repräsentiert;
   d) einen Empfänger (11) des aufgenommenen Kontrollparameters, der ein Signal liefert, das den im Behälter vorherrschenden Druck repräsentiert, dadurch gekennzeichnet, daß einerseits das optische System einen zerstreuenden Träger (7) aufweist, der querverlaufend im Kontrollbündel (8) angeordnet ist, und der insbesondere durch einen Referenzfokussierpunkt (9) verläuft, der durch einen vorbestimmten Wert (Pd) des Druckunterschieds zwischen dem Innenraum und der Außenseite des Behälters bestimmt ist, wobei die physikalische Größe, die als Kontrollparameter herangezogen wird, aus einem Lichtfleck (10) besteht, der sich mehr oder weniger im zerstreuenden Träger (7) erstreckt, insbesondere um den Referenzfokussierpunkt (9) herum, und daß andererseits der Empfänger aus einer Videokamera (11) besteht, die, im Hinblick auf das Kontrollelement (29), auf der anderen Seite des zerstreuenden Trägers (7) angeordnet ist, die den Lichtblick beobachtet und die ein Videosignal (13) ergibt, das den in dem Behälter herrschenden Druck repräsentiert.

7. Vorrichtung nach Anspruch 6, dadurch gekennzeichnet, daß die Videokamera (11) ein Analysator des Bildes des Lichtfleckes (10), und zwar zumindest über eine Raumbeobachtungsrichtung des letzteren, ist.

8. Vorrichtung nach Anspruch 7, dadurch gekennzeichnet, daß die Videokamera einen Stab (14) an lichtempfindlichen Elementen aufweist, die in Beobachtungsrichtung aufgereiht sind.

9. Vorrichtung nach Anspruch 7, wobei die Videokamera Mittel (17) enthält, um ein Videosignal (13) in ein elektrisches Kontrollsignal (19) umzuwandeln.

## Claims

1. Process for monitoring the pressure prevailing in a vessel (1) delimited by a rigid wall (12), in which:
   – on the one hand, in said wall a substantially flat monitoring member (2a) is provided, which separates the interior of the vessel from the outside and is adapted to curve through the action of the difference in pressure between the interior of said vessel and the outside;
   – on the other hand, the monitoring member (2a) forms part of an optical processing chain comprising the following stages:
   a) from a source (5) an incident light beam (6) is directed onto the monitoring member, which emits a reflected light beam (8) and/or a refracted light beam;
   b) a monitoring light beam (8) is obtained from the reflected beam and/or from the refracted beam;
   c) a physical quantity of the monitoring beam, varying in dependence on the curvature of the monitoring member (2a) is selected as monitoring parameter;
   d) the monitoring parameter, the value of which represents the pressure prevailing in said vessel, is picked up (7),
   characterized in that, on the one hand, a diffusing support (7) is disposed transversely in the monitoring beam (8), said diffusing support passing in particular through a reference focal point (9) determined by a preestablished value (Pd) of the difference in pressure between the interior of the vessel and the outside, as the result of which the physical quantity picked up as monitoring parameter consists of a spot of light (10) spreading out to a greater or lesser extent in the diffusing support, particularly around the reference focal point (9), and on the other hand, on the other side of the diffusing support, in relation to the monitoring member (2a), the image formed by the spot of light is received in at least one dimension of said spot in order to obtain a video signal (13) representing the pressure prevailing in said vessel.

2. Process according to Claim 1, characterized in that the video signal (13) is converted into an electrical monitoring signal (19).

3. Process according to Claim 2, characterized in that the monitoring signal (19) is used to discriminate (18) a vessel (1) having the preestablished value (Pd) of the difference in pressure between the inside and the outside, corresponding to the reference focal point (9), from a vessel (1) not having said preestablished value.

4. Process according to Claim 3, characterized in that the monitoring signal (19) used for the discrimination corresponds to the maximum electric output value (H) obtained for the preestablished value (Pd) of the difference in pressure.

5. Process according to any one of Claims 1 to 4, used for the continuous monitoring of containers (1) whose contents (3) must be kept under partial vacuum, said containers having an opening (1a) leaktightly closed by a cover (2) adapted to curve (2a) towards the interior in dependence on the partial vacuum, characterized in that:
   – said containers are displaced (20) in a translatory movement;
   – each container (1) is passed in succession under the incident light beam (6), each of said containers serving as the aforesaid vessel whose internal pressure it is desired to monitor, and each associated cover (2) serving as monitoring member (2a);
   – the video signal (13) associated with each container is used as monitoring signal, which enables the defective containers to be eliminated.

6. Apparatus for monitoring the pressure prevailing in a vessel (1) delimited by a rigid wall (12) provided with a substantially flat monitoring member (2a) separating the interior of the vessel from the outside and adapted to curve through the action of the difference in pressure between the interior of said vessel and the outside; said apparatus including an optical system of which the variable curvature monitoring member is part and which comprises:
   a) a light source (5) for directing an incident light beam (6) onto the monitoring member;
   b) an optical system for obtaining a monitoring light beam from the reflected light beam (8) and/or from the beam refracted by the monitoring member;
   c) a transducer (7) for a physical quantity of the monitoring beam or monitoring parameter, varying in dependence on the curvature of the monitoring member, said transducer providing a signal representing the pressure prevailing in said vessel;
   d) a receiver (11) receiving the monitoring parameter picked up and providing a signal representing the pressure prevailing in said vessel,

characterized in that on the one hand, the optical system comprises a diffusing support (7) disposed transversely in the monitoring beam (8), passing in particular through a reference focal point (9) determined by a preestablished value (Pd) of the difference in pressure between the interior of the vessel and the outside, as a result of which the physical quantity picked up as monitoring parameter consists of a light spot (10) spreading out to a greater or lesser extent in the diffusing support (7), particularly around the reference focal point (9), and, on the other hand, the receiver consists of a video camera (11) disposed on the other side of the diffusing support (7) in relation to the monitoring member (29) and observing said light spot and supplying a video signal (13) representing the pressure prevailing in said vessel.

7. Apparatus according to Claim 6, characterized in that the video camera (11) is an analyser of the image of the light spot (10) in at least one dimension of observation of the latter.

8. Apparatus according to Claim 7, characterized in that the video camera includes an array (14) of photosensitive cells aligned in the direction of observation.

9. Apparatus according to Claim 7, characterized in that the video camera includes a means (17) for converting the video signal (13) into an electrical monitoring signal (19).

FIG.1

FIG.3

FIG.2

EP 0 310 526 B1